Europäisches Patentamt

European Patent Office

Office européen des brevets

(19)

(11) Veröffentlichungsnummer: **0 342 151 B1**

# (12) EUROPÄISCHE PATENTSCHRIFT

(45) Veröffentlichungstag der Patentschrift:
04.12.91 Patentblatt 91/49

(21) Anmeldenummer: 89810308.0

(22) Anmeldetag: 25.04.89

(51) Int. Cl.$^5$: **A47B 67/02, A47B 96/20, F16B 12/02, F16B 12/38**

(54) **Kasten, insbesondere Badezimmerschrank.**

(30) Priorität: 05.05.88 CH 1706/88

(43) Veröffentlichungstag der Anmeldung:
15.11.89 Patentblatt 89/46

(45) Bekanntmachung des Hinweises auf die
Patenterteilung:
04.12.91 Patentblatt 91/49

(84) Benannte Vertragsstaaten:
AT BE CH DE ES FR GB IT LI LU NL SE

(56) Entgegenhaltungen:
EP-A- 0 133 605
AU-B- 520 454
CH-A- 540 827
DE-A- 2 727 361

(73) Patentinhaber: W. SCHNEIDER & CO. AG
Metallwarenfabrik
Alte Dorfstrasse 4
CH-8135 Langnau a/A (CH)

(72) Erfinder: Schneider, Walter
Wildenbühlstrasse 54
CH-8135 Langnau a/A (CH)

(74) Vertreter: Bosshard, Ernst
Schulhausstrasse 12
CH-8002 Zürich (CH)

## Beschreibung

Die Erfindung bezieht sich auf einen Kasten, insbesondere Badezimmerschrank, wobei sich an den Schmalseiten eines aus Kunststoff bestehenden Grundkörpers aussen metallische profilierte Verkleidungsbleche befinden.

Aus der CH-A 540827 geht ein Toilettenschrank, gemäß dem Oberbegriff von Anspruch 1, hervor, bei dem die Wände aus einem Hart-Schaumkunststoff bestehen und wenigstens die Seitenwände je mit einer aus Blech bestehenden Verkleidung versehen sind. Dabei werden die seitlichen Innen- und Aussenwände samt zugehörigen Stirnflächen je von einem im wesentlichen U-förmig geformten Blechstück umgeben.

Aus der EP 0133605 ist ferner bekannt einen Metallkasten in der Weise herzustellen, dass aus Blech bestehende Seitenwände durch Eckverbindungsschienen zusammengehalten werden, die in Längsnuten auf die Seitenwände aufschiebbar sind.

Demgegenüber soll mit der Erfindung die Aufgabe gelöst werden, bei einem aus eigensteifem Kunststoff bestehenden Grundkörper die an den äusseren Schmalseiten anzuordnenden Verkleidungsbleche an den Ecken durch Verbindungsstücke am Grundkörper festzuhalten.

Die Erfindung, mit der diese Aufgabe gelöst wird, ist dadurch gekennzeichnet, dass an den Kastenecken Eckverbindungsschienen vorhanden sind, welche abgekröpfte Randteile der Verkleidungsbleche überdecken, die Eckverbindungsschienen aus federndem Material bestehen und an ihren Enden je ein vorstehendes Kopfstück und Fusstück aufweisen, welche je mit gegeneinander gerichteten Nocken versehen sind, diese Nocken Ansätze des Grundkörpers hintergreifen oder in Oeffnungen des Grundkörpers hineinragen.

Ein solcher Grundkörper wird aus Gewichtsgründen vorzugsweise aus einem schäumbaren Kunststoff hergestellt, dessen Oberfläche glatt und geschlossen ist und der innen bereits Trennwände, Leisten für Tablare und weitere Einbauten enthalten kann. Zum Schutz gegen Beschädigung der relativ weichen Aussenhaut dieses Grundkörpers werden die äusseren Schmalseiten mit metallischen Verkleidungsblechen durch federnde Eckverbindungsschienen mit wenigen Handgriffen befestigt. Dies ergibt eine sehr rationelle Bauweise eines vorzugsweise als Badezimmerschrank ausgebildeten Kastens mit geringen Montagekosten.

In der Zeichnung ist ein Ausführungsbeispiel des Erfindungsgegenstandes dargestellt. Es zeigen :

Fig. 1    eine perspektivische Darstellung eines Kastens in Form eines Badezimmerschrankes
Fig. 2    einen Schnitt durch eine Kastenecke mit aufzusetzender Eckverbindungsschiene
Fig. 3    einen zu Fig. 2 analogen Schnitt mit fertig aufgesetzter Eckverbindungsschiene
Fig. 4    eine perspektivische Ansicht einer Kastenecke samt Verkleidungsblechen und Eckverbindungsschiene
Fig. 5    eine Ansicht der Rückseite einer Kastenecke
Fig. 6    einen Schnitt durch eine Kastenschmalseite mit aufgesetztem Verkleidungsblech
Fig. 7    einen Vertikalschnitt durch eine Kastenecke
Fig. 8    eine perspektivische Innenansicht einer Eckverbindungsschiene

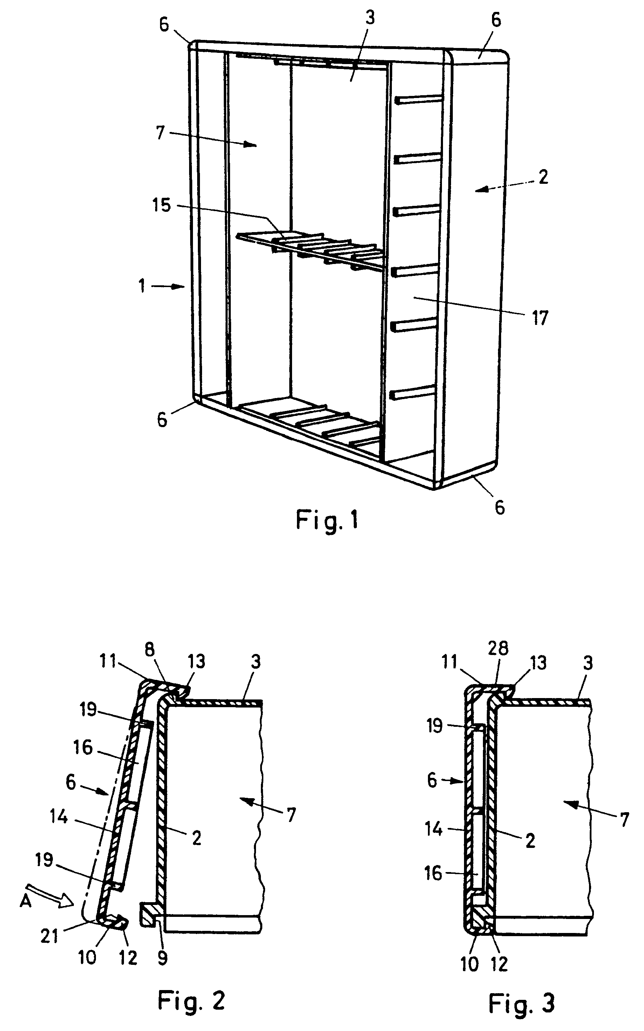

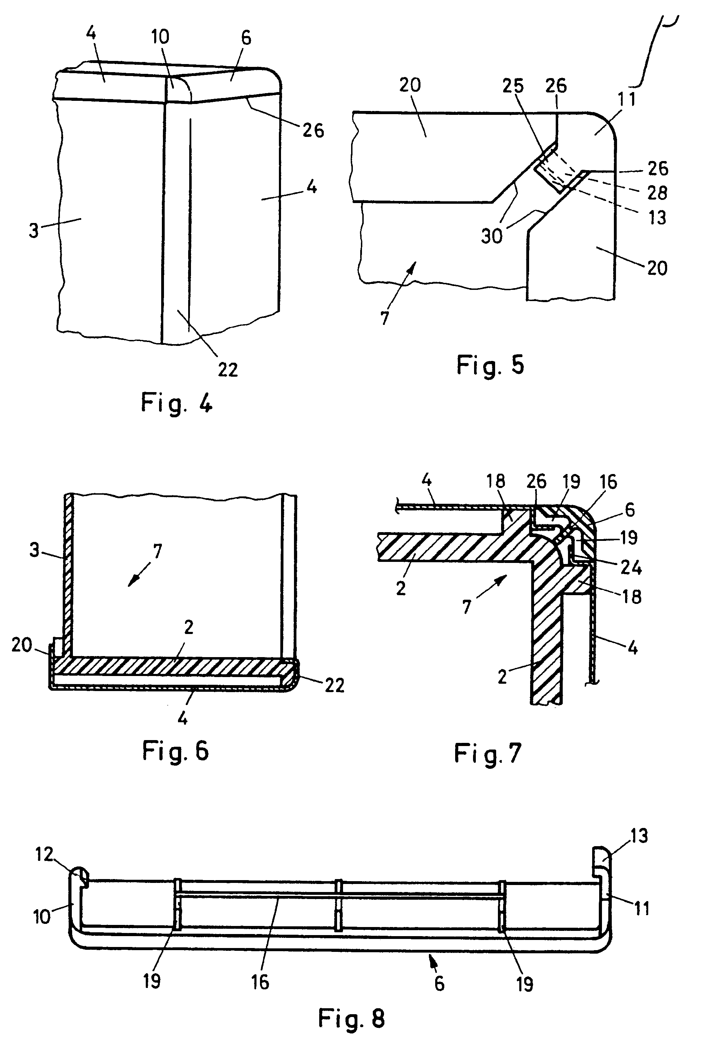

Der Kasten 1 gemäss Fig. 1 ist als Badezimmerschrank ausgebildet, wobei die Tür noch nicht montiert ist. Dieser Kasten 1 mit vier Schmalseiten 2 und einer Rückwand 3 enthält einen aus Kunststoff bestehenden, einstückigen Grundkörper 7 mit mindestens einer Zwischenwand 17 und mindestens einem Tablar 15. Der Innenausbau kann beliebig sein und auch mehrere in der Zeichnung aus Gründen der besseren Uebersicht nicht im Einzelnen dargestellte Ausbauten aufweisen. Die vier Schmalseiten 2 des Kastens 1 sind durch profilierte, metallische Verkleidungsbleche 4 bedeckt, die je an den Ecken mit Eckverbindungsschienen 6 untereinander und mit dem Grundkörper verbunden sind. Wie aus Fig. 6 hervorgeht, bildet jedes dieser Verkleidungsbleche 4 auf der Kastenvorderseite eine etwa U-förmige Rinne 22, welche den vorderen Kastenrand umfasst. Auf der Kastenrückseite sind die Verkleidungsbleche 4 rechtwinklig abgebogen und bilden Rückwandlappen 20. Die einstückigen, federelastischen, aus Kunststoff bestehenden Eckverbindungsschienen 6 enthalten je ein Kopfstück 10 und ein Fusstück 11, die beide mit gegeneinander gerichteten, vorspringenden Nasen 12, 13 versehen sind. Wie aus den Fig. 2 und 3 ersichtlich ist, dienen diese Nasen 12, 13 dazu Vorsprünge 8, 9 des Grundkörpers 7 zu hintergreifen. Um das Aufsetzen dieser Eckverbindungsschienen 6 zu erleichtern hat mindestens die Nase 12 eine Schrägfläche 21, sodass die Eckverbindungsschiene 6 durch Bewegung in Richtung des Pfeiles A auf den Grundkörper 7 durch leichten Druck elastisch aufschnappbar ist. Der Aufschnappvorgang könnte auch in umgekehrter Richtung erfolgen, indem zuerst die Nase 13 eingehängt und dann die Nase 12 durch eine Schwenkbewegung auf den Grundkörper aufgeschnappt wird.

Wie aus Fig. 7 hervorgeht sind die Randpartien 24 der Verkleidungsbleche 4 je im eckbereich Z-förmig abgewinkelt und greifen hinter die Rippen 18 des Grundkörpers 7. Die Eckverbindungsschiene 6 erstreckt sich mit ihrer Längsrippe 16 zwischen die abgewinkelten Randpartien 24 und liegt gegen eine gewölbte Partie des

2

Grundkörpers 7 an. Ferner drücken mehrere Querrippen 19 dieser Eckverbindungsschienen 6 gegen die Z-förmig abgewinkelten Randpartien 24 und halten diese in ihrer Lage verschiebungssicher fest. Die Eckverbindungsschienen 6 sind aussen viertelskreisförmig gewölbt, und bei den Trennfugen 26 ist der Uebergang zu den Verkleidungsblechen 4 bündig. Anstelle einer gerundeten, viertelskreisförmigen Gestalt könnten die Aussenkontur dieser Eckverbindungsschienen 6 auch eckig ausgeführt werden.

Das Kopstück 10 hat eine viertelskreisförmige Frontplatte, wobei der Uebergang zum U-förmigen Rinnenteil 22 bündig ist. Das sich auf der Kastenrückseite befindliche Fusstück 11 enthält zusätzlich zum viertelskreisförmigen Plattenteil einen Lappen 25 mit zueinander parallelen Kanten. Dieser Lappen 25 greift zwischen die in Gehrung geschnittenen Kanten 25 der Rückwandlappen 20 mit Spiel ein. Die Nase 13 dieses Fusstückes 11 greift in eine Vertiefung 28 des Grundkörpers 7 ein.

Die Verkleidungsbleche 4 könnten auch aus farbig eloxiertem Aluminiumblech bestehen und die Eckverbindungsstücke in gleichfarbigem oder farblich kontrastierendem Kunststoff ausgeführt werden.

## Patentansprüche

1. Kasten, insbesondere Badezimmerschrank, wobei sich an den Schmalseiten eines aus Kunststoff bestehenden Grundkörpers (7) aussen metallische, profilierte Verkleidungsbleche (4) befinden, dadurch gekennzeichnet, dass an den Kastenecken Eckverbindungsschienen (6) vorhanden sind, welche abgekröpfte Randteile (24) der Verkleidungsbleche (4) überdecken, die Eckverbindungsschienen (6) aus federndem Material bestehen und an ihren Enden je ein vorstehendes Kopfstück (10) und Fusstück (11) aufweisen, welche je mit gegeneinander gerichteten Nocken (12, 13) versehen sind, diese Nocken (12, 13) Ansätze (8, 9) des Grundkörpers (7) hintergreifen oder in Oeffnungen des Grundkörpers (7) hineinragen.

2. Kasten nach Anspruch 1, dadurch gekennzeichnet, dass die Eckverbindungsschienen (6) aus derart elastisch-federndem Kunststoff-Material bestehen, dass sie auf den Grundkörper (7) aufschnappbar sind.

3. Kasten nach Anspruch 1 oder 2, dadurch gekennzeichnet, dass der Grundkörper (7) aus einem einzigen Stück besteht und die Verkleidungsbleche (4) je eine die Grundkörper-Vorderkante übergreifende, im Querschnitt U-förmige Rinne (22) und einen die Grundkörper-Hinterkante überdeckenden, abgewinkelten Teil (20) enthalten.

4. Kasten nach einem der Ansprüche 1-3, dadurch gekennzeichnet, dass die Verkleidungsbleche (4) im Eckbereich Z-förmig abgewinkelte Randteile (24) enthalten, Querrippen (19) der Eckverbindungsschienen (6) gegen diese Randteile (24) anliegen und die Eckverbindungsschienen (6) je eine gegen den Grundkörper (7) gerichtete Längsrippe (16) enthalten.

5. Kasten nach einem der Ansprüche 1-4, dadurch gekennzeichnet, dass die Eckverbindungsschienen (6) aussen gewölbt sind und zu den Aussenflächen der Verkleidungsbleche (4) bündig verlaufen, das Kopfstück (10) eine viertelkreisförmige, plattenartige Aussenform hat und das Fusstück (11) plattenförmig ausgebildet ist und einen den Nocken (13) tragenden, zwischen die in Gehrung geschnittenen Verkleidungsbleche (4) eingreifenden Lappen (25) enthält.

6. Kasten nach Anspruch 2, dadurch gekennzeichnet, dass mindestens einer der Nocken (12, 13) eine das Aufschnappen erleichternde Schrägfläche (21) enthält.

## Claims

1. A cabinet, more especially a bathroom cabinet, with profiled trim panels (4), which are metal on the outside, being located on the narrow sides of a basic frame (7) made of plastic, **characterised in that** on the cabinet corners there are corner connection bars (6), which cover edge parts (24) bent at right angles of the trim panels (4), the corner connection bars (6) are made from a resilient material and at its ends each has a protruding cap piece (10) and base piece (11), each of which is provided with cams (12, 13) directed towards one another, and these cams (12, 13) engage behind lugs (8, 9) on the basic frame (7) or project into apertures in the basic frame (7).

2. A cabinet according to Claim 1, **characterised in that** the corner connection bars (6) are made from such an elastically resilient plastic material that they can be snapped onto the basic frame (7).

3. A cabinet according to Claim 1 or 2, **characterised in that** the basic frame (7) is made from a single piece and each trim panel (4) contains a groove (22) covering the front edge of the basic frame and having a U-shaped cross section and a bent part (20) covering the rear edge of the basic frame.

4. A cabinet according to one of Claims 1 to 3, **characterised in that** the trim panels (4) contain edge parts (24) bent in a Z shape in the corner region, transversal ribs (19) of the corner connection bars (6) abut against these edge parts (24) and each corner connection bar (6) contains a longitudinal rib (16) directed towards the basic frame (7).

5. A cabinet according to one of Claims 1 to 4, **characterised in that** the edge connection bars (6) are curved outwards and extend flush with the external surfaces of the trim panels (4), the cap piece (10) has a quadrantal plate-like external shape and the base piece (11) is constructed in a plate shape and contains a tab (25) engaging between the mitred trim panels (4) and bearing one of the cams (13).

6. A cabinet according to Claim 2, **characterised in that** at least one of the cams (12, 13) contains an inclined surface (21) facilitating the snap action.

## Revendications

1. Armoire, en particulier armoire de salle de bains, dans laquelle, à l'extérieur des côtés étroits d'un bâti (7) en plastique se trouvent des tôles de revêtement métallique profilées (4), caractérisée en ce que, au niveau des coins de l'armoire, se trouvent des rails d'assemblage en cornière (6), qui recouvrent des parties marginales coudées (24) des tôles de revêtement (4), les rails d'assemblage en cornière (6) sont en un matériau élastique et comportent en chacune de leurs extrèmités une pièce supérieure (10) en saillie et une pièce inférieure (11) en saillie, dont chacune est pourvue d'ergots (12, 13) dirigés l'un contre l'autre, ces ergots (12, 13) s'encliquettent en arrière d'épaulements (8, 9) du bâti (7) ou pénètrent dans des ouvertures aménagées dans le bâti (7).

2. Armoire selon la revendication 1, caractérisée en ce que les rails d'assemblage en cornière (6) sont constitués d'un matériau plastique élastique de façon à pouvoir être encliquetés sur le bâti (7).

3. Armoire selon la revendication 1 ou 2, caractérisée en ce que le bâti (7) est constitué d'une pièce unique, et que chacune des tôles de revêtement (4) contient une gouttière (22) dont la section est en forme de U, et qui recouvre l'arête avant du bâti, ainsi qu'une pièce (20), repliée et recouvrant l'arête arrière du bâti.

4. Armoire selon l'une des revendications 1 à 3, caractérisée en ce que les tôles de revêtement (4) contiennent dans leurs zones de coin des pièces marginales (24) repliées en Z, que des nervures longitudinales (19) des rails d'assemblage en cornière (6) s'appuient contre ces pièces marginales (24), et que chacun des rails d'assemblage en cornière (6) contient une nervure longitudinale (16) dirigée vers le bâti (7).

5. Armoire selon l'une des revendications 1 à 4, caractérisée en ce que les rails d'assemblage en cornière (6) sont extérieurement cintrés et sont en affleurement avec les surfaces extérieures des tôles de revêtement (4), la pièce supérieure (10) a une forme extérieure en plaque en quart de cercle, et la pièce inférieure (11) est conçue comme une plaque et comporte une patte (25), portant l'ergot (13) et s'engrénant entre les tôles de revêtement (4) découpées en onglets.

6. Armoire selon la revendication 2, caractérisée en ce qu'au moins l'un des ergots (12, 13) contient une surface en biais (21) qui facilite l'encliquetage.

## Fig. 1

## Fig. 2

## Fig. 3

Fig. 4

Fig. 5

Fig. 6

Fig. 7

Fig. 8